Europäisches Patentamt

European Patent Office

Office européen des brevets

(19)

(11) Publication number: **0 175 657**
A1

(12) # EUROPEAN PATENT APPLICATION

(21) Application number: 85830229.2

(22) Date of filing: **12.09.85**

(51) Int. Cl.⁴: **G 06 F 15/20,** G 08 B 13/00,
G 08 B 27/00

---

(30) Priority: **14.09.84 IT 2266684**

(43) Date of publication of application: **26.03.86**
**Bulletin 86/13**

(84) Designated Contracting States: **AT BE CH DE FR GB LI
LU NL SE**

(71) Applicant: **I.T.C. S.p.A., Viale Montegrappa,
I-27100 Pavia (IT)**

(72) Inventor: **Carbonera, Antonio, Corso Cavour, 44/A,
I-27100 Pavia (IT)**

(74) Representative: **Raimondi, Alfredo, Dott. Ing. Prof et al,
Studio Tecnico Consulenza Brevetti Piazzale
Cadorna 15, I-20123 Milano (IT)**

---

(54) An interface device among one or more computers and sensors and actuators in control apparatuses.

(57) The object of this invention is an interface device (1) for control apparatuses formed by sensors (44) of the antitheft type, applied, for instance, in different places which are to be watched as doors, windows and the like, or of another type such as anti-fire, anti-flooding and the like, and one or more computers (10A) (10B) which receive the information from said sensors, elaborate said information according to predetermined programs loaded into said computers, and then send to the interface (1) the necessary instructions for activating the actuators (45) of the physical operations of the control. Said device (1) includes an intelligent unit formed by a central processing unit (2) having permanent and volatile memories (3) and parallel/serial conversion circuits (8) for serial communication with the computer (10A) and with possible accessory management devices (9), parallel input/ output circuits (4) (5) (6) (7), in combination with an interface unit in which the number of the contacts for the control functions and the number of the digital optoisolated inputs for the logic states of the sensors may be selected according to the special purposes required.

EP 0 175 657 A1

An interface device among one or more computers and
sensors and actuators in control apparatuses

The present invention relates to a device which is
effective to act as an interface between one or more
computers and a series of sensors and contacts for
detecting the state of the sensors therein,  and
activating or deactivating appropriate contacts
connected to apparatuses which are pre-arranged for
intervention, alarm and the like, according to special
programs.

In various systems, in which detecting of events with
subsequent intervention of organs, apparatuses and
the like is required, depending on the event which
occurred, having to be detected by said systems,it arises
the  problem  of establishing the combination between
the causes represented by the state of said sensors
and the effects represented by the activation of the
control contacts of said organs or apparatuses.

On the other side, it also arises the necessity of being
independent from a rigidly predetermined situation, in
order to have the possibility, also for the user, of
easily varying the combinations which control  the
actuations.

Above technical problem has been solved, in accordance
with the present invention, by providing an interface
device to be connected at one end with one or more
computers and at the other end  with  sensors  and

- 2 -

0175657

actuating contacts, and being suitable to allow the automatic bidirectional transmission of information and commands among the sensors and the computers and among the computers and the actuators.

Said interface device is not provided with an intelligence of its own. and cannot therefore decide the combination of the actions to undertake, but it can detect the state of the sensors and transmit it to the computer; from this latter it receives commands for activating the contacts and execute them. The management of the control functions, according to the present invention, is provided to be effected by the programs loaded on the computers, which are connected to the interface device.

Therefore, this invention presents the advantage of offering the possibility, also to the user, of changing the combinations of actions very quickly, thereby disengaging the control management from the fixed correspondence between the operation of detecting the state of the sensors and the subsequent activation of the contacts, which according to the prior art would be determined by utilizing a static circuit.

The mentioned technical problems are solved by means of an interface device, applied among one or more computers and sensors and actuators in a control apparatus and the like, comprising:
an intelligent unit constituted by a central processing unit and permanent memories, which are connected to said central processing unit, for recording the instructions of the dialogue with said computers and of sampling the sensors; volatile memories connected to said central processing unit for recording temporary data; programmable serial processors for the connnection with said computers and/or reading, recording or similar devices; programmable integrated circuits generating the serial communication frequencies and the internal clocks, at least one parallel input/output device for pre-driving the control circuits of the contacts or relays acting on said actuators, which operate the system control functions; an input unit which receives the signals coming from the sensors and identifies the provenance sensor; a power supply unit comprising voltage regulators, suitable to supply a controlled voltage to the different electronic devices of the interface , completes the general diagram of the invention.

In particular, said intelligent unit is constituted by a microprocessor, preferably having eight or more bits, and by one or more integrated circuits of the EPROM type connected to said microprocessor, while the volatile memories are formed by integrated circuits of the RAM type, in connection with said microprocessor of said intelligent unit.

Said programmable serial processors comprise: a programmable integrated circuit, which is suitable to generate serial communication frequencies and internal clocks, a frequency divider, an integrated serial processor, a circuit capable of determinating the enabling priority between said frequencies generator

0175657

and said integrated serial processor, and devices for communicating with the peripheral organs.

Said devices for communicating with the peripheral organs consist of at least four level translators depending upon the number of the provided outputs.

Conveniently, the peripheral organs include at least one computer and, possibly, at least one reading or recording or similar device, preferably embodied by a reader for magnetic cards, for example, of the personal identity card type, known with the english name "badge" for application in intrusion-detecting systems.

Said input unit includes an optoisolator for each input, a decoder and a logic circuit, preferably of the exclusive OR type, determinating the direction of the communications.

A further characteristic of the interface device according to the present invention is the possibility for the user of fixing the number of the sensors enabled to send the signals, by means of the programs of said one or more computers.

The above and other objects, features and advantages of the present invention will become more readily apparent from the following description, reference being made to the accompanying drawing, in which:

Fig. 1 is a blocks diagram generally and schematically illustrating an embodiment of the interface device.

- 5 -

0175657

Fig. 2 is a perspective view of the interface device according to the invention.

Fig. 3 is a simplified circuit diagram of the central processing unit.

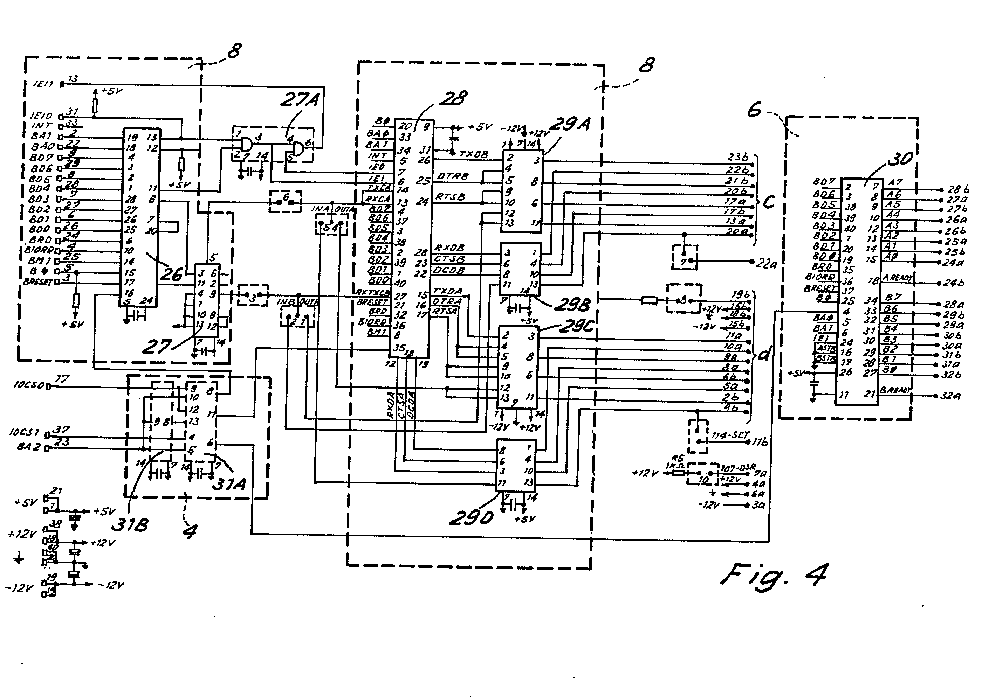

Fig. 4 is a simplified circuit diagram of the printed circuit board embodying the programmable serial processor.

Fig. 5 is a simplified circuit diagram of the intercommunication circuits with the sensors through the optoisolator.

Fig. 6 is a preferred embodiment of a driving stage of the relays.

The electrical interconnections, not shown, are executed in a known manner, by connecting for each element the corresponding circuit elements, utilizing alpha-numerical symbols, which are indicated in the elements themselves.

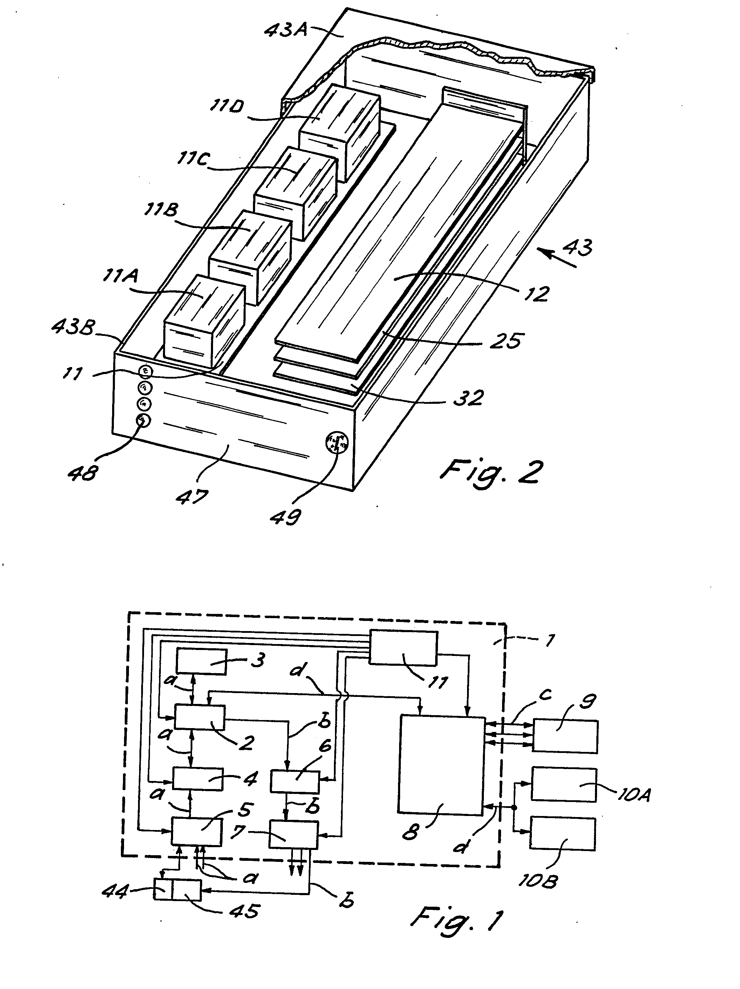

As is apparent from fig. 1, the interface device, generally indicated 1, is provided with a central processing unit 2 (known as CPU), a data memory 3, a sensor decoder 4 and an optoisolator group 5, located along the bus a between sensors and CPU; moreover, a series of energy level translators 6 and a series of relays 7 placed on the bus b between CPU and the ON-OFF type actuators for actuating different devices are provided.

Said interface device 1 also comprises a programmable serial processor 8, provided with bus, generally indicated c, which may be connected to recognizing devices, for instance, of the electromagnetic card type, indicated by the reference 9, and a bus d, with one or more, preferably two computers, indicated in fig. 1 10A and 10B; a power supply unit 11 for the various elements is also provided; in this figure, a generic sensor 44 and a generic actuator 45, among the many types which may be provided, are represented.

As shown in fig. 2, the power supply unit 11 comprises a series of known elements indicated 11A, 11B, 11C, 11D (transformers, capacitors, voltage regulators and the like), these elements having in input a line voltage, being effective to supply the necessary voltage levels for the controlled feeding of the digital circuital part and of the optoisolator part, more particularly: 5 Volts for the TTL logic circuits, which will be described hereinafter, 12 Volts for said programmable serial processors 8 and a further 12 Volts voltage, differing from the foregoing voltage because of the complete decoupling between voltage and ground, which is utilized for feeding the optoisolator group 5.

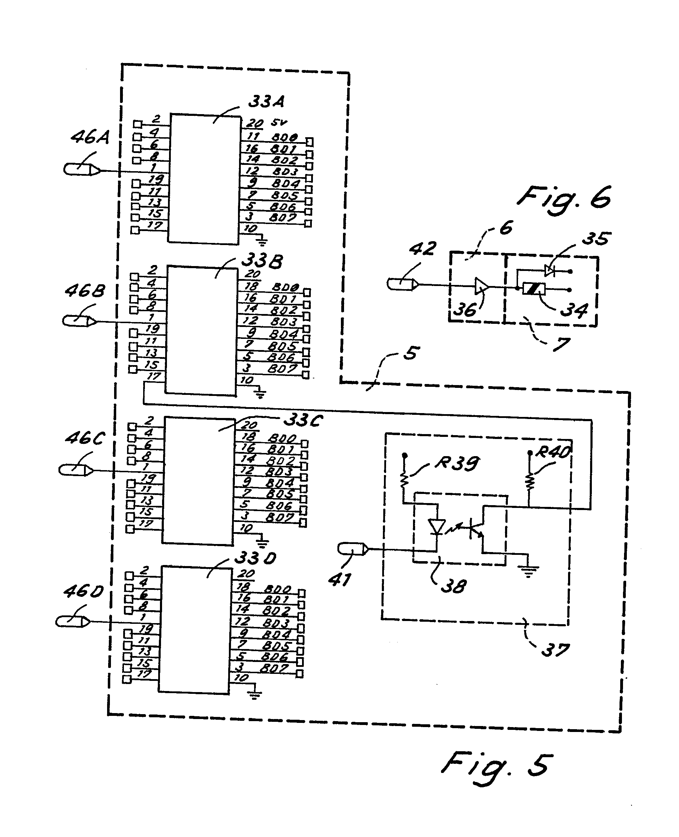

Referring now in particular to fig. 2 and fig. 5, it will be described a representative but not limitative embodiment of the electrical circuit and of the components of the central processing unit 2, being formed by a printed circuit board 12, on which the necessary logic micro-components are located; in particular: a microprocessor 13 (a known type with tradename Z80) having known regulating components, which are therefore not to be

- 7 -

0175657

described; five integrated circuits, one of which being an EPROM 14 type memory and the others, indicated 15A, 15B, 15C, 15D, being RAM type memories; two decoder elements 16 and 17 provided with appropriate pre-arranged electrical configurations 16A and 17A of the prior art which, when being connected to the RAM, allow the communication of each one of these memories at a time with the central processing unit 2; a known crystal oscillator 18 which supplies the operative frequency of the intelligent integrated circuits and an initializing group 19 for the hand-reset of the system during testing. The diagram is completed by a connecting element among the boards, consisting of two intercommunication units (known as transceiver) 20 and 21, said transceiver 21 being enabled by a logical circuit AND 22, and the communication direction being determined by an exclusive OR logic circuit 24. A decoder 23 for the signals coming from the intercommunication circuits 33A, 33B, 33C, 33D (fig. 5) and for selecting the intelligent chips 26, 28 and 30 is also provided. Under the CPU 12 board there is located the printed circuits board 25 forming the programmable serial processor; on said board there is provided a programmable electronic component 26, generating the serial communication frequencies, and the internal clocks; furthermore, there is provided a frequency divider 27, a circuit 27A determinating priority between said circuit 26 and the serial processor 28, as well as the energy level translators 29A, 29B, 29C, 29D for each serial line; said board being completed by a parallel input/output device 30 for pre-driving the relays control circuits and by the logic elements 31A and 31B, coupled with the decoder 23.

A further element constituting this system is the printed

0175657

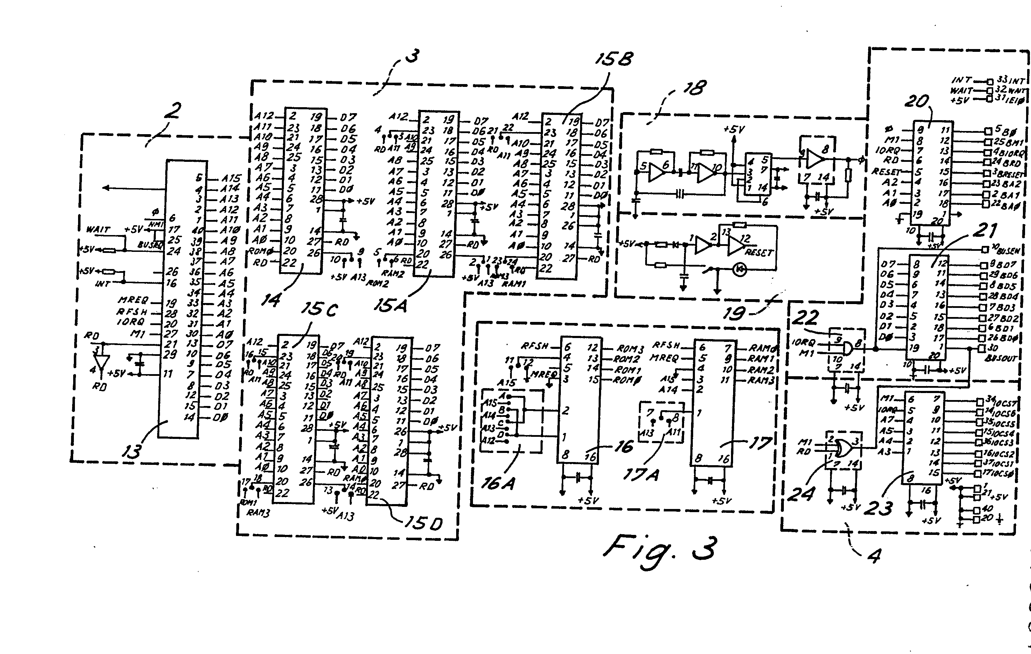

circuits board 30, comprising four intercommunication circuits 33A, 33B, 33C, 33D, which are enabled to communicating with the CPU by convenient signals coming from the decoder 23 (fig. 3) and sent to the points 46A, 46B, 46C and 46D. Said integrated circuits serve to detect the state of each sensor, by means of the optoisolator 37. Said block 37 being provided on each sensor and consisting of an optoisolator 38 of the prior art, two resistances R39 and R40, which are effective for the correct limitation of the circulating current, and an input 41 for connection to the sensor.

In fig. 6, the driving stage 36 of a relay 34 is illustrated, the output of which becoming outwardly available, by means of a connector, not shown in said figure. The input of the driving stage 36 is received by the block 30 through the connector 42; the device being completed by a protective diode 35.

The above described circuit components are located in a substantially rectangular container 43 formed by two parts 43A and 43B, which are overlapping and detachable to allow an easy access for maintenance or repair service (fig. 2).

The flow of the signals, going from the sensors to the interface, therefrom to the computer and back, is as follows:
the generic sensor 44 determinates, by means of its open or closed state, a logic voltage level in the output from the optoisolator 5, which eliminates the passage of possible noise to the circuitry; said voltage passes through the transceiver 21 to the microprocessor 13; the CPU effects

0175657

a preliminary filtering through a program to eliminate eventual electric transients, which may be identified as useful signals and it successively records on the available RAM memories the signal indicating the state of the sensor.

The computer 10A sends a cyclic inquiry about the sensor state, via the programmable serial processor 8, and the interface replies sending an answer when no sensor varied its state, or sending the code of the sensor, or sensors, which have changed their actual state. Via the same bus, the signals can reach the computer which, in turn, compares them by means of the program with the signals previously loaded into its memory.

In case of variation in the sensor state, the computer searches in its memory the instructions related to the operations which are to be effected with respect to such particular detected variation; otherwise, when no variation in the actual state of the sensors occurred, the computer goes on sending its inquiry about the state of the sensors. At this point, the flow of the instructions is starting and, from the computer 10A, will reach the generic actuator indicated 45, as fixed by the program.

More particularly, said signal arrives, via the programmable serial processor 8, to the central processing unit 2 which, after effecting a control of congruence through program, sends to the energy level translator 6, constituted by the integrated circuit 36, a precise signal or voltage level, which is apt to excite the corresponding relay, while this relay, connected to an actuator device of whatever type (electrical sirens, water-streams or the like), will enable the operation which is provided for to be effected.

0175657

Fig. 2 illustrates also the frontal panel 47 of said device, on which panel there are incorporated the warning lights 48, signalling the state of the device, and a known type keylock switch 49 for starting the system.

Many variations may be introduced in the practical execution of embodiments according to the present invention, without, however, moving away from the general context of the invention and its global characteristics.

- 11 -

0175657

CLAIMS

1) An interface device among one or more computers
and sensors and actuators in control apparatuses or the
like characterised in that it comprises in combination:
at least a central processing unit having permanent
memories connected to said central processing unit for
recording the instructions for the dialogue with said
computers and of sampling of the sensors, volatile memories
connected to said central processing unit for recording
temporary data; programmable serial processors for the
connection with the computers and/or reading, recording
or similar devices, programmable integrated circuits
generating the serial communication frequencies and the
internal clocks; at least one parallel input/output
device for pre-driving the control circuits of the
contacts or relays acting on said actuators which operate
the system control functions, an input unit which receives
the signals coming from the sensors and identifies the
sensor itself, a power supply unit comprising voltage
regulators which are suitable to supply a controlled
voltage to the different electronic devices of the interface.

2) An interface device according to claim 1 characterised
in that said intelligent unit is constituted by a microprocessor, preferably having eight or more bits, and by one
or more integrated circuits of the EPROM type connected
to said microprocessor, constituting the permanent memory.

3) An interface device according to claim 1
characterised in that said volatile memories are formed
by integrated circuits of the RAM type in connection with

0175657

said microprocessor of said intelligent unit.

4) An interface device according to claim 1 characterised in that said programmable serial processors comprise: a programmable integrated circuit which is suitable to generate serial communication frequencies and internal clocks; a frequency divider; an integrated serial processor; a circuit capable of determinating the enabling priority between said frequencies generator and said integrated serial processor; devices for communicating with the peripheral organs.

5) An interface device according to the preceding claims characterised in that said devices for communicating with the peripheral organs consist of at least four level translators depending upon the number of the outputs provided.

6) An interface device according to the preceding claims characterised in that said peripheral organs include at least one computer and, possibly, a reading, recording or similar device, preferably embodied by a reader for magnetic cards.

7) An interface device according to the preceding claims characterised in that said input unit includes an optoisolator for each input, a decoder and a logic circuit, conveniently of the exclusive OR type, determinating the direction of the communication.

8) An interface device according to the preceding claims characterised in that the number of the sensors enabled 0175657
to send the signals may be fixed from the user by means
of the programs of said one or more computers.

Fig. 2

Fig. 1

Fig. 3

Fig. 4

Fig. 5

Fig. 6

0175657

0175657

Application number

**European Patent Office**

## EUROPEAN SEARCH REPORT

| | DOCUMENTS CONSIDERED TO BE RELEVANT | | EP 85830229.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | US - A - 4 263 655 (CHAPPELL, JR.)<br>* Abstract; fig. 1 *<br>-- | 1 | G 06 F 15/20<br>G 08 B 13/00<br>G 08 B 27/00 |
| A | US - A - 4 410 961 (DLUGOS et al.)<br>* Abstract; fig. 1 *<br>-- | 1 | |
| P,A | DE - A1 - 3 415 008 (SIEMENS)<br>* Claim 1; fig. 1 *<br>-- | 1 | |
| A | EP - A1 - 0 106 191 (SIEMENS)<br>* Claim 1 *<br>-- | 1 | |
| A | EP - A1 - 0 021 232 (FUSS)<br>* Claim 1,11; fig. 1 *<br>---- | 1,2 | **TECHNICAL FIELDS SEARCHED (Int. Cl.4)**<br><br>G 06 F<br>G 08 G |

The present search report has been drawn up for all claims

| Place of search | Date of completion of the search | Examiner |
|---|---|---|
| VIENNA | 20-12-1985 | MIHATSEK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82